# EUROPEAN PATENT APPLICATION

(11) **EP 1 750 270 A2**
(43) Date of publication of application: **07.02.2007**
(21) Application number: 06016343.3
(22) Date of filing: 04.08.2006
(51) Int. Cl.: G11B 27/34, G11B 27/32, G11B 27/034

(54) **Method and apparatus for creating and reproducing media data in a mobile terminal**

(30) Priority: 05.08.2005 KR 20050071726; 28.06.2006 KR 20060058926
(71) Applicant: Samsung Electronics Co., Ltd., Suwon-si, Gyeonggi-Do (KR)
(72) Inventor: Kim, Na-Kyung Samsung Electronics Co., Ltd., Suwon-si Gyeonggi-do (KR); Choi, Seung-Chul Samsung Electronics Co., Ltd., Suwon-si Gyeonggi-do (KR); Lee, Dong-Eon Samsung Electronics Co., Ltd., Suwon-si Gyeonggi-do (KR)
(74) Representative: Lang, Johannes

(57) **Abstract**

A method and apparatus for creating and reproducing media data in a mobile terminal are provided. Previously stored audio data is selected and media data is created by using at least one image data selected corresponding to the audio data. If a user selects audio data to reproduce, it is determined whether media data corresponding to the audio data exists. If media data corresponding to the audio data exists, the media data is output.

## Description

### BACKGROUND OF THE INVENTION

### Field of the Invention:

The present invention relates to a mobile terminal. More particularly, the present invention relates to a method and apparatus for creating media data in a mobile terminal.

### Description of the Related Art:

As more people use mobile terminals, various functions are operated in response to user demands. These functions include outputting and/or reproducing various media data such as personal information, which can help a user enjoy spare time with various activities.

According to conventional functions of the mobile terminal, a music reproduction function allows a user to select and reproduce desired music data while displaying a preset image on a display unit in response to the reproduced music data. It is difficult, however, to display various images at the request of user.

Accordingly, there is a need for an improved mobile terminal for allowing a user to select and reproduce desired music data while displaying various images at the request of the user.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention has been made to solve the above-mentioned problems occurring in the prior art, and it is an object an exemplary embodiment of the present invention to provide a method for creating media data in a mobile terminal which allows a user to create media data on a display unit while MPEG-3 Layer (MP3) or similar music file is reproduced, thereby producing visual effects.

In accordance with one aspect of an exemplary embodiment of the present invention, a method for creating and reproducing media data in a mobile terminal is provided. Previously stored audio data is selected and media data is created by using at least one image data selected to correspond to the audio data. If a user selects audio data to be reproduced, a determination is made as to whether media data corresponding to the audio data exists. If media data corresponding to the audio data exists, the media data is also output.

### BRIEF DESCRIPTION OF THE DRAWINGS

The above and other exemplary objects, features and advantages of certain exemplary embodiments of the present invention will be more apparent from the following detailed description taken in conjunction with the accompanying drawings, in which: .
FIG. 1 is a block diagram illustrating an overall structure of a mobile terminal to which the invention is applied;
FIG. 2 is a flowchart illustrating a process for creating media data according to an exemplary embodiment of the present invention;
FIG. 3 is a flowchart illustrating a process for reproducing media data according to an exemplary embodiment of the present invention;
FIG. 4 is a flowchart illustrating a process for creating media data according to another exemplary embodiment of the present invention; and
FIG. 5 is a flowchart illustrating a process for reproducing media data according to another exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In the following exemplary embodiments of the present invention, any data such as music data and voice data that can be output by an audio processor 160 will be defined as audio data. Any data such as dynamic images and still images that can be displayed by a display unit will be defined as image data. Furthermore, when the audio data is synthesized with the image data into a specific type of data, it will be defined as media data.

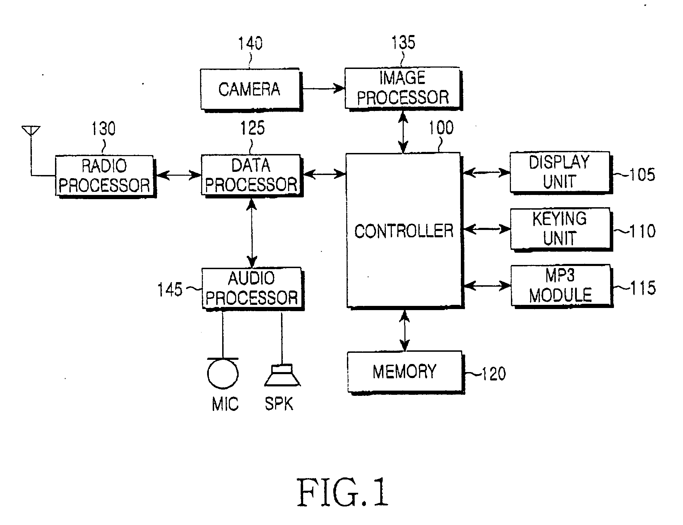

FIG. 1 is a block diagram illustrating an overall structure of a mobile terminal to which the invention is applied. Referring to FIG. 1, a controller 100 serves to control overall functions of the mobile terminal. In particular, according to an exemplary embodiment of the present invention, when the controller 100 detects a media data creation menu input by a user, it reads an image data table and an audio data table stored in a memory 120 and controls a display unit 105 to display such data. In addition, the controller 100 synthesizes image data with audio data into media data, and controls a memory 120 to store such synthesized media data. Once a user-input signal with instructions to reproduce audio data is detected, the controller 100 reproduces media data, in which the audio data is synthesized with corresponding image data, if the media data exists. According to another exemplary embodiment of the present invention, when image data or audio data previously stored in the memory 120 is selected, the controller 100 can create media data by inserting one of the image and audio data into the other. Alternatively, the controller 100 may control to create second media data by synthesizing media data, which is initially created by synthesizing image data with audio data, with other audio and image data.

The display unit 105 displays the present state such as each process state and operation state under the control of the controller 100 in response to key input from the keying unit 110. The display unit 105 also displays image data output from an image processor 135 and a user interface that indicates the operation of a photographing function. Here, the display unit 105 can be a Liquid Crystal Display (LCD), in which the display unit 105 may comprise an LCD controller, a memory capable of storing image data and an LCD indicator device, among others. In a case where the LCD is exemplified by a touch screen, the keying unit 110 and the LCD may serve as an input unit. The display unit 105 includes an image data display unit for display image data. According to this exemplary embodiment of the present invention, when the controller 100 selects a menu for creating media data, the display unit 105 serves to display an audio data table or image data table to use for the creation of such media data. Furthermore, the display unit 105 serves to output the image portion of the media data which is created by synthesis of audio data with image data.

A camera 140 has a camera sensor for photographing image data and converting a photographed optical signal into an electric signal. The camera sensor is assumed as a Charge Coupled Device (CCD) sensor. The image processor 135 functions to create screen data for displaying an image signal. Under the control of the controller 100, the image processor 135 transmits the received image signal according to the standard of the display unit 105 and compresses and expands the image data as well. The camera 140 and the image processor 135 may be integrated into a single camera unit. The camera 140 and the image processor 135, according to an exemplary embodiment of the present invention, function to photograph image data such as still and dynamic images which are components aimed to be created as media data.

The radio processor 130 serves to communicate with a mobile communication terminal. The radio processor 130 includes a Radio Frequency (RF) transmitter for amplifying a transmitted signal and up-converting its frequency and an RF receiver for amplifying a received signal with low noise and down-converting its frequency.

A modem or data processor 125 includes a transceiver for encoding and modulating the transmitted signal and a receiver for demodulating and decoding the received signal.

An audio processor 145 may be constructed of a codec, which has a data codec for processing packet data and an audio codec for processing audio signals such as voice. The audio processor 145 reproduces a digital audio signal received at the data processor 125 by converting the signal into an analog signal through the audio codec or sends a transmitted analog audio signal created at a microphone to the data processor 125 by converting the signal into a digital audio signal through the audio codec. If set by the user to reproduce media data, the audio processor 145, according to this exemplary embodiment of the present invention, functions to output music data included in the media data. When the camera photographs a dynamic image of image data that is a component to create media data, the audio processor 145 receives audio data of the media data through the microphone connected to the audio processor 160. An MP3 module 115 can also be provided to output music data included in the media data.

The keying unit 110 has input keys used to input number and letter information and function keys used to set various functions. The keying unit 110 according to the exemplary embodiment of the present invention is used to receive a menu for media data creation from the user. In addition, the keying unit 110 is used to select music and image data according to media data creation and to input a menu for synthesis of selected data. With the keying unit 110, it is possible to input a key to stop media data or image data from reproducing in order to insert another audio or another image data.

The memory 120 stores a program executed by the controller 100 or data processed by the program. The memory 120 stores a variety of data such as bell sounds, MP3 data and dynamic images that can be output from a mobile terminal. The memory 120 also stores other data such as telephone numbers and messages. The memory 120 includes a Read Only Memory (ROM) storing an operation program, an Electrically Erasable Programmable Read Only Memory (EEPROM) and a Random Access Memory (RAM). The memory 120, according to this exemplary embodiment of the present invention, can store a program running to synthesize audio data with image data to be created into media data. The memory 120 also stores audio and image data to be created into media data, and stores the media data created by synthesis of the audio data with the image data.

As described above, a mobile terminal constructed in accordance with an exemplary embodiment of the present invention can include the memory 120, the keying unit 110 and the controller 100. The memory 120 serves to store audio and image data to be created into media data and stores a program for synthesizing the audio and image data into the media data. With the keying unit 110, the audio and image data are selected for edits to be made. The controller 100 is adapted to synthesize the selected data into media data when data stored in the memory 120 is selected. When a reproduction effect on media data is set, the controller 100 is also adapted to modify media data according to such effect and control overall functions of the functional components.

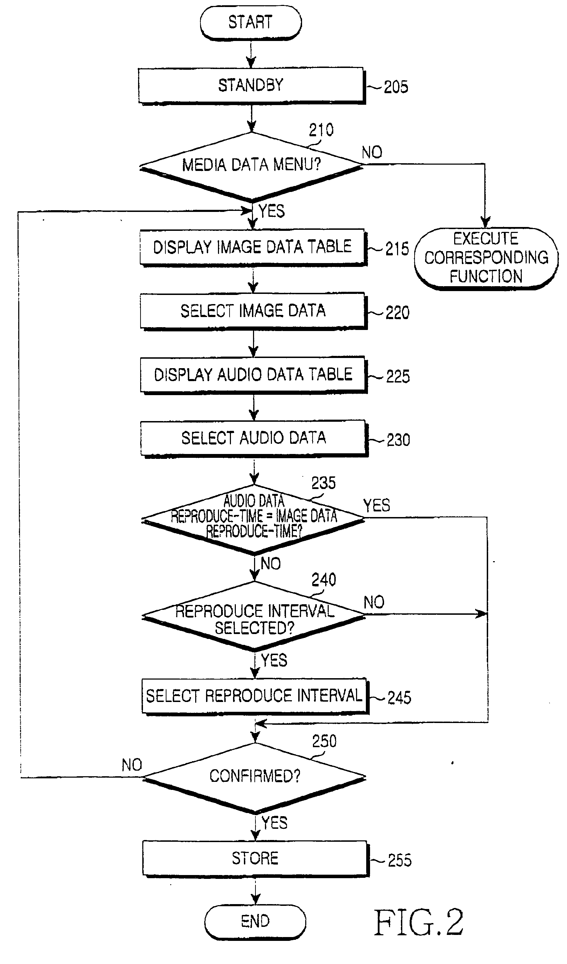

FIG. 2 is a flowchart illustrating a process for creating media data according to an exemplary embodiment of the present invention. Referring to FIG. 2, the controller 100 operates in a standby mode in step 205. When the controller 100 detects a key input signal from the keying unit 110 in the standby mode, it executes step 210 to determine whether the key input signal is a key signal for a media data menu with instructions to reproduce or create media data. If the input key signal is not the menu key signal with instructions to process media data, the controller 100 controls the process to perform a function corresponding to the input key. Alternatively, if the input key is the menu key, the controller 100 executes step 215 to display a media data table stored in the memory 125. Media data therein include images such as still and dynamic images input from the camera 145 or any other images input via the radio processor 130.

The controller 100 executes step 220 where at least one image data to be created into media data is selected from the displayed image data table. In step 225, the controller 100 displays an audio data table stored in the memory 125 so that audio data to be displayed together with the image data is selected. The audio data may include MP3 music data, music data from the radio processor, and other audio data such as voice data. Then, the controller 100 executes step 230 where at least one audio data to be reproduced as a background audio of the image data selected in step 220 is selected from the displayed audio data table. If a determination is made that the selections of the audio and image data are completed, the controller 100 confirms the reproduction times of the selected image and audio data in step 235. That is, the total reproduction time of the image data selected in step 220 above is compared with that of the audio data selected in step 230 above. When a plurality of audio and image data are selected, the total reproduction times of the plural audio data and those of the plural image data are summed up, respectively, before being confirmed.

The controller 100 compares the reproduction time of the image data with that of the audio data to determine whether the reproduction times of the image data is equal to that of the audio data in step 235. If the reproduction time of the image data is equal to that of the audio data, the controller 100 determines, in step 250, whether a confirmation key with instructions to terminate the media data creation is input. If the confirmation key is input, the controller 100 bundles the selected audio and image data into single media data, and stores the created media data in step 255.

If the reproduction time of the image data is not substantially equal to that of the audio data in step 235 above, the controller 100 determines whether a menu is input, by which a reproduction period of the image or audio data or reproduction periods of the image and audio data can be selected to create the media data. That is, the controller 100 determines whether an edit menu is input, by which the different reproduction times of the image and audio data can be edited to be equal. If a determination is made that the edit menu is selected in step 240, the controller 100 executes step 245 where a reproduction part of the audio data is selected corresponding to the reproduction time of the image data, a reproduction part of the image data is selected corresponding to the reproduction time of the audio data, or reproduction parts of the image and audio data are selected according to the reproduction times to be substantially equal. Upon discerning an input of a confirmation key confirming termination of the editing, the controller 100 bundles the edited data into media data and stores the media data in the memory 125 in step 255.

As set forth above, in the process according to this exemplary embodiment of the present invention, image and audio data are selected to create media data selected by the user. The controller 100, upon confirming the reproduction status of the selected image and audio data, bundles the data by editing according to reproduction time, and then stores the resultant media data. Alternatively, the controller 100 may bundle the image and audio data as they are into single media data and then store the media data.

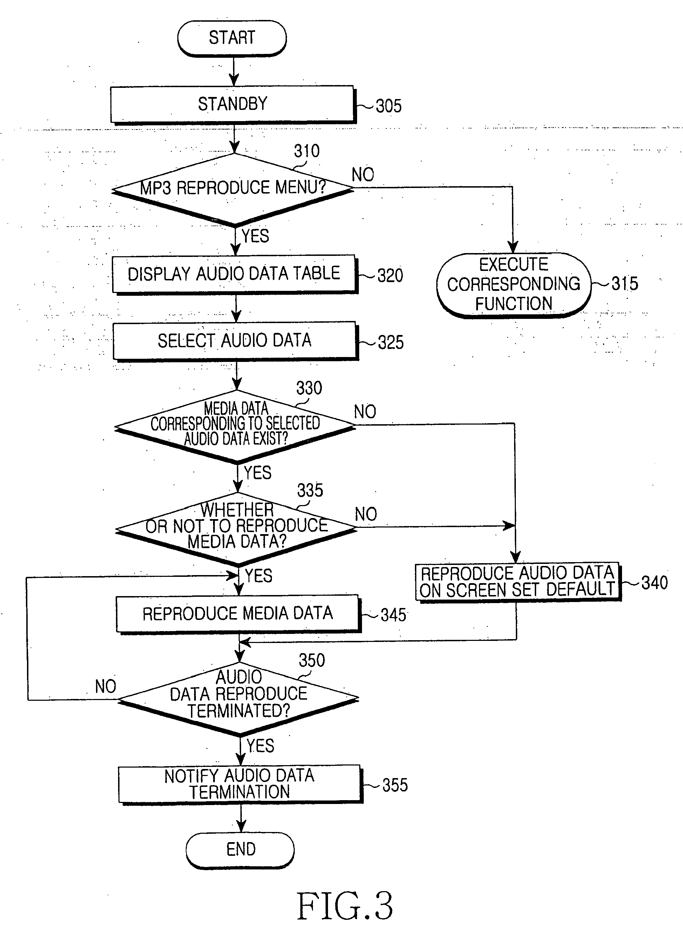

FIG. 3 is a flowchart illustrating a process for reproducing media data according to an exemplary embodiment of the present invention. Referring to FIG. 3, the controller 100 operates in a standby mode in step 305. When the controller 100 detects a key input signal from the keying unit 110 in the standby mode, it executes step 310 to determine whether the key input signal is a key signal with instructions to reproduce an MP3 reproduction menu. If the input key is not the MP3 reproduction menu key, the controller 100 executes step 315 to perform a function corresponding to the input key. Alternatively, if the input key is the MP3 reproduction menu key, the controller 100 executes step 320 to display an audio data table stored in the memory 125. Then, the controller 100 executes step 325 where at least one audio data is selected from the displayed audio data table. In step 330, the controller 100 determines whether to display image data on the display unit 105 while the selected audio data is reproducing. That is, the controller 100 determines whether the selected audio data is created as media data. Any audio data created as media data may be indicated with a different icon so that the user can easily recognize it from the displayed audio data table.

If the selected audio data is not media data, the controller 100 reproduces the audio data while displaying a screen stored as a default such as an equalizer screen in step 340. Alternatively, if the selected audio data is media data, the controller 100 executes step 335 to determine whether there is any input with instructions to reproduce the audio data as specific media data which is displayed together with preset image data. If the selected audio data is not instructed to be reproduced as media data, the controller 100 reproduces the audio data in a manner similar to a case where the media data does not exist. That is, the controller 100 executes step 340 to reproduce the audio data while displaying the screen set as default. Alternatively, if the controller 100 is instructed to reproduce the selected audio data as media data in step 335 above, the controller 100 reproduces the audio data while displaying image data corresponding to the audio data on the display unit 105 in step 345.

In step 350, when reproducing the audio data while displaying the image data set corresponding to the audio data in step 345 or while displaying the image data set as default in step 350, the controller 100 determines whether the reproduction time of the audio data is terminated after a preset time period.

If the reproduction time of the audio data is terminated, the controller 100 outputs a video or audio message informing that the reproduction of the audio data is terminated in step 355, and then terminates the reproduction of the audio data.

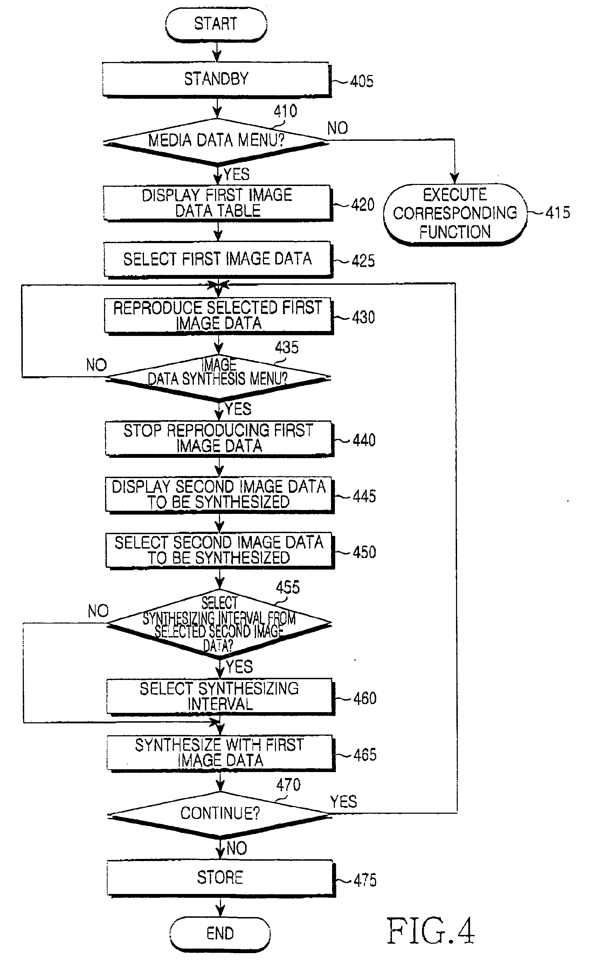

FIG. 4 is a flowchart illustrating a process for creating media data according to another exemplary embodiment of the present invention. In this exemplary embodiment of the present invention, image or audio data that a user selects to reproduce is defined as first image or audio data, and image or audio data that is synthesized with the first image or audio data at a preset time point is defined as second image or audio data. Referring to FIG. 4, the controller 100 operates in a standby mode in step 405. When the controller 100 detects a key input signal in the standby mode, it executes step 410 to determine whether the key input signal is a key signal with instructions to process a media data menu for the creation and reproduction of media data. If the input key signal is not the menu key signal with instructions to process the media data menu, the controller 100 executes a function corresponding to the input key in step 415. Alternatively, if the input key is the menu key, the controller 100 displays image data table for the creation of media data in step 420.

The controller 100 executes step 425 where first image data is selected from the displayed image data table. Then, the controller 100 reproduces the selected first image data in step 430. In step 435, the controller 100 determines whether a data synthesis menu is selected while the first image data is reproducing. With the data synthesis menu, the first image data can be synthesized with second image data or second audio data while reproducing. In this exemplary embodiment of the present invention, the first image data is reproduced and the second image data is synthesized with the first image data. If a determination is made that the synthesis menu is input for the synthesis of the first and second image data while the first image data is reproducing, the controller 100 stops to reproduce the first image data reproducing in step 430, at a time point that the synthesis menu is input in step 440. Then, the controller 100 displays an image data table, which is previously stored and used for the synthesis of the first and second image data in step 445.

Then, the controller 100 executes step 450 where the second image data to be synthesized with the first image data is selected from the displayed image data table. In step 455, the controller 100 determines whether to select an part of the selected second image data to be synthesized with the first image data. A specific part of the second image data may be synthesized with the first image data or the entire second image data may be synthesized with the first image data. Accordingly, the controller 100 determines whether the user has selected an part selection menu by which edits can be made in response to the synthesis of the first and second image data, and if the menu is selected, executes step 460 where an part of the second image data to be synthesized with the first image data is selected.

In step 465, the controller 100 synthesizes the first image data with the part of the second image data selected in step 460 above or with the entire second image data. When the first image data is synthesized with the second image data, it is possible to select the direction of displaying the second image data or displaying effects. After the first image data is synthesized with the selected part of the second image data, if a key input signal with instructions to synthesize the first image data with a third image data is received, the controller 100 returns to step 430 to reproduce the first image data after a time point when the synthesis menu is input. If such a key input signal is not received, the controller 100 stores new media data where the first image data is synthesized with the second image data in the memory 125 in step 475.

While this exemplary embodiment of the present invention has been explained with regard to an image data synthesis where the first image data is synthesized with the second image data, any audio data contained in the first and second image data can be synthesized also according to user selection if the first and second image data are dynamic image data. When the first image data is synthesized with the second image data, the audio data contained in the second image data may also be synthesized. Furthermore, in case of synthesizing the first image data with the second image data, it is possible to display the second image data to overlap the first image data reproducing.

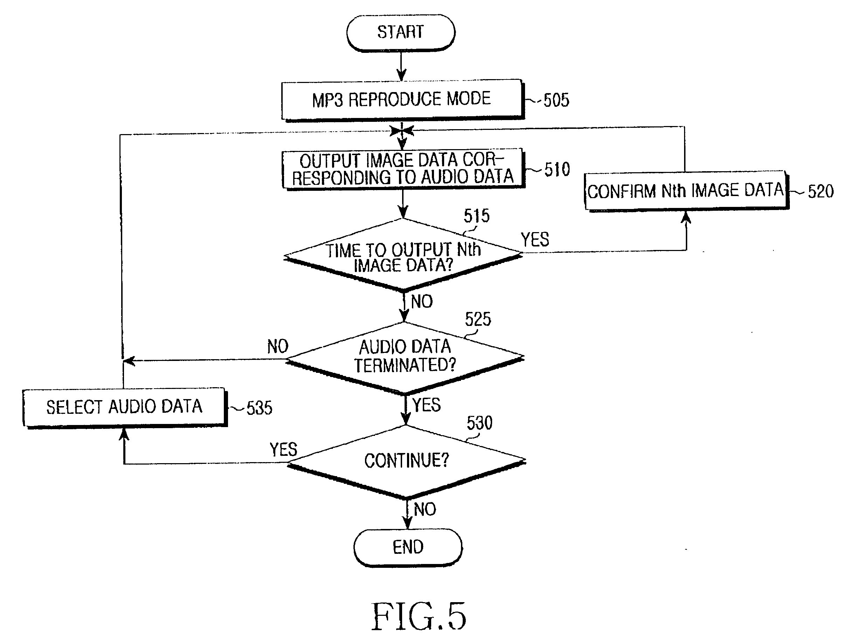

FIG. 5 is a flowchart illustrating a process for reproducing media data according to another exemplary embodiment of the present invention. This exemplary embodiment of the present invention will be described in conjunction with FIG. 5 of a case where MP3 audio data selected by a user is synthesized with a plurality of image data at the request of the user to reproduce media data which is stored in a packet with the audio data. Referring to FIG. 5, the controller 100 executes step 505 of enabling the user to input an MP3 reproduction menu, by which MP3 audio data can be reproduced, and reproducing selected MP3 audio data. In step 510, the controller 100 outputs the audio data selected by the user together with first image data stored, corresponding to the audio data. Then in step 515, the controller 100 determines whether it has reached a time to output second image data synthesized with the first image data while reproducing the first image data.

If it is time to output a second image data synthesized with the first image data, the controller confirms the second image data to be output in step 520, and then outputs the second image data according to its pattern synthesized with the first image data. Alternatively, if it is not time to output the second image data synthesized with the first image data, the controller 100 determines whether the reproduction of the audio data is terminated in step 525. If the reproduction of the audio data is not terminated, the controller 100 returns to step 510 above and repeats steps 510 to 525. If the reproduction of the audio data is terminated in step 525, the controller 100 displays a message informing that the reproduction of the audio data is terminated. Then in step 530, the controller 100 determines whether the user inputs a key signal with instructions to reproduce second audio data. If the key signal with instructions to reproduce second audio data is input from the user, the controller 100, based on audio data selection by the user, repeats the above process starting with step 510. If the key signal for the reproduction of a second audio signal is not input from the user, the controller 100 terminates the reproduction process of the audio data.

According to certain exemplary embodiments of the present invention as set forth above, audio (music) and image data are synthesized to create media data according to user selection. This makes it possible to display image data desired by the user while reproducing music data, thereby enhancing visual effects.

When audio data to be reproduced is selected, the controller determines whether image data corresponding to the audio data exists, and based on the determination, reproduces the audio and image data. Alternatively, a media data table previously stored may be displayed so that the user can select one media data from the table to reproduce.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for creating and reproducing media data in a mobile terminal, the method comprising:
enabling previously stored audio data to be selected;
creating media data by using at least one image data selected to correspond to the audio data;
if a user selects audio data to reproduce, determining whether media data corresponding to the audio data exists; and
if media data corresponding to the audio data exists, outputting the media data.

2. The method as claimed in claim 1, wherein the creating of media data comprises:
confirming reproduction times of the selected image and audio data;
if the reproduction times are different from each other, synthesizing the audio and image data based on an part selected corresponding to at least one of the reproduction time of the audio data and that of the image data; and
bundling the synthesized audio and image data into the media data, and storing the media data in the memory.

3. The method as claimed in claim 1, wherein the creating of media data comprises:
enabling a reproduction part of the audio data to be selected;
enabling a reproduction part of the image data to be selected;
synthesizing and bundling the reproduction parts of the audio and image data into the media data, and storing the media data.

4. The method as claimed in claim 2, wherein in the creating of media data, an output direction and a displaying effect of the image data are set and stored.

5. The method as claimed in claim 1, wherein, if previously stored media data corresponding to the audio data does not exist when the audio data is reproduced, image data, which is to be displayed while the audio data is reproduced, is selected and is displayed on a display unit while the audio data is reproduced.

6. The method as claimed in claim 1, wherein the audio data includes MPEG-3 Layer (MP3) audio data and voice data, and the image data includes still and dynamic images.

7. A method for creating and reproducing media data in a mobile terminal, comprising:
enabling previously stored first image data to be selected;
reproducing the selected first image data;
enabling a synthesis menu to be inputted while reproducing the first image data, the synthesis menu instructing a user to synthesize the first image data with second image data;
stopping the first image data from reproducing, enabling the second image data to be selected, synthesizing the first and second image data, bundling the synthesized image data with audio data selected by a user, and storing the bundled data as media data; and
if selected to reproduce the media data, outputting the stored bundled data.

8. The method as claimed in claim 7, wherein, when reproduced, the first image data and the second image data overlap each other.

9. The method as claimed in claim 7, wherein the reproducing of the media data comprises:
outputting the first image data when reproducing the audio data;
determining whether it is time to reproduce the second image data; and
displaying the second image data.

10. The method as claimed in claim 7, wherein, if the second image data to be synthesized contains audio data, the audio data of the second audio data is synthesized together with the second audio data according to user settings.

11. The method as claimed in claim 7, wherein in the synthesizing of the first image data and the second image data, an part for synthesis is selected, and the first and second image data are synthesized according to the part.

12. The method as claimed in claim 7, wherein in the synthesizing of the first and second image data, if the second image data is dynamic image data including audio data, and if the audio data of the second image data is selected to be synthesized, the audio data of the second image data is selected and synthesized with the first image data.

13. The method as claimed in claim 3, wherein in the creating of media data, an output direction and a displaying effect of the image data are set and stored.

14. A mobile terminal comprising:
a controller for synthesizing audio data with image data to create media data;
a memory for storing synthesized media data; and
a display unit for outputting the media data.

15. The mobile terminal as claimed in claim 14, wherein the controller detects a
media data creation menu input by a user and reads an image data table and an audio data table stored in the memory.

16. The mobile terminal as claimed in claim 14, wherein the controller creates second media data by synthesizing media data which is initially created by synthesizing image data with audio data.

17. The mobile terminal as claimed in claim 14, wherein the controller confirms
reproduction times of a selected image data and audio data.

18. The mobile terminal as claimed in claim 14, wherein the controller bundles
selected audio data and image data into media data.

19. The mobile terminal as claimed in claim 14, further comprising:
a keying unit for inputting a key to stop at least one of media data and image data
from reproduction to facilitate insertion of another image.

20. The mobile terminal as claimed in claim 14, further comprising at least one of a camera to input the image data, a radio receiver to input the audio data, an MP3 module to input the audio data, and a camera to input audio data recorded when the image data was captured.
